(19) Europäisches Patentamt
European Patent Office
Office européen des brevets

(11) **EP 2 492 562 A2**

(12) **EUROPÄISCHE PATENTANMELDUNG**

(43) Veröffentlichungstag:
    **29.08.2012 Patentblatt 2012/35**

(51) Int Cl.:
    **F16K 99/00** *(2006.01)*

(21) Anmeldenummer: **12156842.2**

(22) Anmeldetag: **24.02.2012**

(84) Benannte Vertragsstaaten:
    **AL AT BE BG CH CY CZ DE DK EE ES FI FR GB GR HR HU IE IS IT LI LT LU LV MC MK MT NL NO PL PT RO RS SE SI SK SM TR**
    Benannte Erstreckungsstaaten:
    **BA ME**

(30) Priorität: **25.02.2011 DE 102011000938**
    **17.06.2011 DE 102011051140**

(71) Anmelder: **RM te me na GmbH**
    **34587 Felsberg (DE)**

(72) Erfinder:
    • **Lang, Walter**
     **28357 Bremen (DE)**
    • **Burdorf, Kai**
     **28857 Syke (DE)**

(74) Vertreter: **Stoffregen, Hans-Herbert**
    **Patentanwalt**
    **Friedrich-Ebert-Anlage 11b**
    **63450 Hanau (DE)**

(54) **Strömungswiderstand**

(57) Die Erfindung bezieht sich auf einen Strömungswiderstand (48), umfassend einen Strömungskanal (50) mit einer Einlassöffnung (56) und einer Auslassöffnung (58) sowie eine zumindest abschnittsweise Wandung des Strömungskanals (50) bildende Membran (22), wobei Strömungsquerschnitt des Strömungskanals (50) durch Ausübung von Druck auf die Membran (22) variierbar ist. Um einen Strömungswiderstand (48) mit temperaturkompensierter Flußrate zur Verfügung zu stellen, ist vorgesehen, dass der Strömungswiderstand (48) eine ein Medium (42) mit positivem Temperaturkoeffizienten enthaltende Kavität (16) sowie eine Strömungskammer (20) aufweist, dass die Membran (22) die Kavität (16) von der Strömungskammer (20) trennt und sowohl Wandung der Kavität (16) als auch zumindest abschnittsweise Wandung des Strömungskanals (50) ist, dass der Strömungskanal (50) als eine zur Membran (22) hin offene spiralförmige Ausnehmung in einer Oberfläche (52) einer die Strömungskammer (20) verschließenden unteren Abdeckung (54) ausgebildet ist, dass eine Zuflussöffnung (56) im Zentrum einer von dem Strömungskanal (50) aufgespannten Fläche und eine Abflussöffnung (58) randseitig derart angeordnet sind, dass der Strömungskanal (50) sowohl in Bezug auf seinen Strömungsquerschnitt als auch in Bezug aus seine Länge, auf der die Membran (22) aufliegt, in Abhängigkeit von Temperatur T des Mediums (42) variierbar ist.

<u>48</u>

Fig. 3

EP 2 492 562 A2

**Beschreibung**

Die Erfindung bezieht sich auf einen Strömungswiderstand, umfassend einen Strömungskanal mit einer Einlassöffnung und einer Auslassöffnung sowie eine zumindest abschnittsweise Wandung des Strömungskanals bildende Membran, wobei ein Strömungsquerschnitt des Strömungskanals durch Ausübung von Druck auf die Membran variierbar ist.

Ein Strömungswiderstand bzw. ein variabler Flusswiderstand ist aus der DE-A-102 54 312 bekannt. Der aus DE-A-102 54 312 bekannte Flusswiderstand umfasst eine Fluidleitung fester Länge, die einen Fluideinlass mit einem Fluidauslass verbindet. Ferner ist eine Einrichtung zum Variieren des Strömungsquerschnitts der Fluidleitung über eine vorbestimmte Länge derselben zum Einstellen des durch die Fluidleitung definierten Flusswiderstandes vorgesehen, wobei das Verhältnis von vorbestimmter Länge der Fluidleitung zu charakteristischem Durchmesser derselben > 500 ist. Die Einrichtung zum Variieren des Strömungsquerschnitts ist derart ausgebildet, um von außen auf Wandabschnitte der Fluidableitung einen Druck auszuüben, der unabhängig von Druck eines Mediums in der Fluidleitung ist. Die Fluidleitung wird durch einen in der Oberfläche eines Substrats gebildeten Kanal und eine den Kanal abdeckende Membran gebildet. Die Einrichtung zum Variieren des Strömungsquerschnitts der Fluidleitung ist eine Einrichtung zum Auslenken der Membran, insbesondere eine Einrichtung zum Beaufschlagen der Membran mit einem Druck.

In dem Aufsatz von P. Cousseau u. a., "Improved Micro-Flow Regulator for drug delivery systems", 2001 IEEE, S. 527 - 530, ist ein Flussregler offenbart, der innerhalb eines vorbestimmten Betriebsdruckbereichs eine konstante Flussrate trotz Druckdifferenz liefern soll. Der Flussregler umfasst eine in einem ersten Substrat gebildete Membran, durch die mittig eine Einlassöffnung vorgesehen ist. In einem zweiten Substrat ist eine Fluidkammer gebildet, die eine Auslassöffnung besitzt. In der Unterseite der Fluidkammer ist ein spiralförmiger, nach oben offener, kapillarer Kanal gebildet. Die beiden Substrate sind derart miteinander verbunden, dass die Membran die in dem zweiten Substrat gebildete Fluidkammer nach oben abschließt. Wird ein Druck auf die Membran ausgeübt, so wird diese zunächst mittig abgelenkt, bis diese mittig auf den Boden der Fluidkammer trifft. In diesem Zustand überlappt die Einlassöffnung durch die Membran mit dem Inneneren Ende des in dem Boden gebildeten Kanals, so dass die Einlassöffnung und der Kanal fluidmäßig verbunden sind. Bei zunehmender Auslenkung der Membran bildet diese zusammen mit dem Kanal einen Flusswiderstand, dessen Länge mit zunehmender Auslenkung der Membran zunimmt. Somit soll trotz Druckdifferenzunterschieden aufgrund des zunehmenden Flusswiderstandes eine gleichmäßige Flussrate beibehalten werden.

In der DE 199 13 143 A1 ist ein Durchflussmengenregler beschrieben, umfassend eine Basisplatte, eine mit der Basisplatte verbundene Deckelplatte mit einem Einlass und einem Auslass sowie eine in der Deckelplatte ausgebildete adiabatische Kammer, die auf der oberen Oberfläche der Basisplatte angeordnet ist. Ferner ist eine mit dem oberen Umfang der adiabatischen Kammer verbundene Membran vorgesehen, wobei die Membran einen Kältemittelraum bildet, in welchem Kältemittel eingefüllt ist, wobei der Kältemittelraum zwischen der Deckelplatte und der adiabatischen Kammer angeordnet ist. Ferner ist eine mit der unteren Oberfläche der adiabatischen Kammer verbundene Scheibe zum Dichten des Druckerzeugungsmediums und eine Einrichtung zum Erwärmen der in den Druckerzeugungsraum gefüllten Wärmeausdehnungslösung vorgesehen.

In der DE 10 2008 054 220 A1 ist ein thermopneumatisches Mikroventil auf Basis von Phasenwechselmaterial beschrieben, welches eine Regulierung von z. B. Gasströmen in Abhängigkeit der Umgebungstemperatur ermöglicht. Das Mikroventil umfasst einen Ventilraum mit einem Eintrittskanal und einem Austrittskanal. Ferner ist ein Expansionsraum vorgesehen, der ein bei Erwärmung expandierendes Arbeitsmedium enthält. Die Räume werden durch eine Membran getrennt, wobei im geöffneten Zustand des Mikroventils die Membran ein Durchströmen eines Fluids vom Eintrittskanal durch den Ventilraum zum Austrittskanal erlaubt, während im geschlossenen Zustand durch die Expansion des Arbeitsmediums eine Deformation der Membran bewirkt wird, durch die ein Durchströmen eines Fluids vom Eintrittskanal durch den Ventilraum zum Austrittskanal verhindert wird.

Die DE 690 14 759 T2 beschreibt eine Bornitridmembran in einer Halbleiterplättchenstruktur. Die Schichtstruktur umfasst einen oberen Waferteil, einen unteren Waferteil, wobei die oberen und unteren Waferteile derart miteinander gekoppelt sind, dass sie einen Hohlraum bestimmen. Ferner ist eine Membran vorgesehen, wobei die Membran mit dem unteren Waferteil gekoppelt und im Wesentlichen aus wasserstofffreiem Bornitrid mit einer nominalen Zusammensetzung von $B_3N$ gebildet ist. Die Membran erstreckt sich in dem Hohlraum zwischen dem oberen und unteren Waferteil und bildet eine Bauteilkomponente innerhalb des Hohlraums.

In der US 2003/0010948 A1 ist ein Durchflussmengenregler beschrieben, umfassend ein zweites Substrat mit einem flexiblen dünnen Film, die zwischen einem ersten Substrat, welches einen Heizmechanismus aufweist und einem dritten Substrat, welches einen Dichtbereich aufweist, angeordnet ist. Das erste Substrat und das zweite Substrat schließen einen inneren Raum ein, der angrenzend an den Heizmechanismus angeordnet und mit einem expandierbaren Material gefüllt ist. Der Dichtungsbereich und der flexible dünne Film bilden zusammen ein Ventil.

Die JP 09330132 A offenbart ein Halbleiterdrucksensor-Modul mit Ventil- und Drucksteuerung. Um den Halbleiterdrucksensor mit einem Ventil auszubilden ist vorgesehen, dass auf der Oberseite eines Substrats ein Halbleiterdrucksensor und ein Halbleiterventil angeordnet sind, wobei auf der Substratoberfläche ein Gehäuse angeordnet ist, welches beide abdeckt. In das Gehäuse kann Messgas eingeleitet werden, wobei das Innere des Gehäuses eine Druckkammer bildet. Ein Halbleiterventil kann offen/zu gesteuert werden, indem ein thermisch expandierendes Druckfluid erwärmt wird, wodurch ein Diaphragma gebogen und eine Durchgangsöffnung geöffnet/geschlossen wird und den Durchfluss eines Gases in die Druckkammer freigibt.

Die DE-A-196 50 115 offenbart eine Medikamenten-Dosiervorrichtung, die eine auswechselbare Einheit sowie eine dauerhafte Einheit umfasst. Die auswechselbare Einheit weist ein Fluidreservoir zur Aufnahme eines unter Druck setzbaren, flüssigen Medikaments, einen Temperatursensor zum Erfassen der Temperatur des flüssigen Medikaments, einen mit einem Flusswiderstand versehenen, fluidmäßig mit dem Fluidreservoir verbundenen Fluidkanal und eine mit dem Fluidkanal verbundene Schlaucheinrichtung auf. Die dauerhafte Einrichtung weist eine Quetschventilvorrichtung zum Zusammenquetschen der Schlaucheinrichtung und eine Steuereinrichtung auf, die mit dem Temperatursensor und der Quetschventilvorrichtung gekoppelt sind, um eine Flussrate des flüssigen Medikaments durch ein getaktetes Betätigen der Quetschventilvorrichtung abhängig von der erfassten Temperatur zu steuern.

Ferner sind aus dem Stand der Technik Perfusionspumpen, auch Spritzenpumpe oder Perfusor genannt, bekannt, die der kontinuierlichen, intravenösen Verabreichung von Medikamenten über einen längeren Zeitraum dienen. Es werden zwei Varianten von Perfusionspumpen unterschieden. Bei einer ersten Variante wird ein Kolben einer aufgezogenen Standartspritze mit einem Elektromotor so verschoben, dass eine bestimmte Flüssigkeitsmenge in einem vordefinierten Zeitraum abgegeben wird. Ein Arzt gibt die Dosis und den Zeitraum für eine Elektronik vor, die dann den Motor bzw. den Kolben steuert. Das Medikament wird dem Patienten über einen Schlauch mit einer Kanüle zugeführt.

Eine zweite Variante ist wesentlich einfacher konstruiert und benötigt eine Elektronik sowie einen elektrischen Antrieb nicht. Die zu verabreichende Medikamentenlösung wird mit einer Spritze in einen elastischen Ballon oder Schlauch gedrückt, so dass sich dieser ausdehnt. Ein Rückschlagventil verschließt den Ballon danach eingangsseitig, während die rückstellenden elastischen Kräfte das Medikament über einen Schlauch mit einer Kanüle in den Patienten abgeben.

Bei einer derartigen Vorrichtung wird die Dosis bzw. die Flussrate über einen Strömungswiderstand (Restriktionsstrecke) vorgegeben, welcher im Verlauf des Schlauchs vorzugsweise in Form einer sehr dünnen Glaskapillare integriert ist. Eine derartige Ausführungsform zeichnet sich durch ihre passive Arbeitsweise und Einfachheit aus und ist kostengünstig und jederzeit flexibel einsetzbar.

Bedingt durch Fertigungstoleranzen kann es bei den oben beschriebenen Ausführungsformen von Strömungswiderständen zu inakzeptablen Abweichungen von der Sollflussrate kommen.

Da es sich bei den zu verabreichenden Medikamenten in der Regel um wässrige Lösungen handelt, deren Viskosität vergleichsweise stark temperaturabhängig ist, ist die Sollflussrate auch stark temperaturabhängig. Für reines Wasser liegt die Viskosität bei einer Temperatur von 5 °C beispielsweise bei 1,5 mPas, während diese bei einer Temperatur von 25 °C auf 0,9 mPas sinkt. Dies bedeutet, dass eine Flüssigkeitsmenge, die bei einer Temperatur von 25 °C in 3 Stunden verabreicht wird, bei einer Temperatur von 5 °C ca. 5 Stunden zum Durchlaufen benötigen würde.

Oben beschriebene Nachteile führen dazu, dass passive Perfusionspumpen, insbesondere für große Medikamentenvolumen sich am Markt nicht durchsetzen können bzw. konnten.

Davon ausgehend liegt der vorliegenden Erfindung die Aufgabe zu Grunde, einen Strömungswiderstand der eingangs genannten Art, insbesondere zur Verwendung in Perfusionspumpen, derart weiterzubilden, dass ein Strömungswiderstand mit temperaturstabilisierter Flussrate bereitgestellt wird.

Die Aufgabe wird erfindungsgemäß dadurch gelöst, dass der Strömungswiderstand eine ein Medium mit positivem Temperaturkoeffizienten enthaltende Kavität sowie eine Strömungskammer aufweist, dass die Membran die Kavität von der Strömungskammer trennt und sowohl Wandung der Kavität als auch zumindest abschnittsweise Wandung des Strömungskanals ist, dass der Strömungskanal als eine zur Membran hin offene spiralförmige Ausnehmung in einer Oberfläche einer die Strömungskammer verschließenden unteren Abdeckung ausgebildet ist, dass eine Zuflussöffnung im Zentrum einer von dem Strömungskanal aufgespannten Fläche und eine Abflussöffnung randseitig derart angeordnet sind, dass der Strömungskanal sowohl in Bezug auf seinen Strömungsquerschnitt als auch in Bezug aus seine Länge, auf der die Membran aufliegt, in Abhängigkeit von Temperatur T des Mediums variierbar ist.

Dabei ist vorgesehen, dass der Strömungswiderstand eine Kavität aufweist, die ein Medium mit einem positiven Temperaturkoeffizienten enthält, wobei die Membran gleichzeitig Wandung der Kavität sowie zumindest abschnittsweise Wandung des Strömungskanals ist. Der Strömungskanal ist als eine zur Membran hin offene spiralförmige Ausnehmung in einer Oberfläche einer die Strömungskammer verschließenden unteren Abdeckung ausgebildet. Eine Zuflussöffnung ist im Zentrum einer von dem Strömungskanal aufgespannten Fläche und eine Abflussöffnung randseitig angeordnet.

Der Erfindung liegt die Idee zu Grunde, ein sich bei steigender Temperatur ausdehnendes Medium in einer Kavität einzuschließen, wobei die Membran als eine Wand dieser Kavität ausgebildet ist, die gleichzeitig Wandung des Strömungskanals ist.

Erwärmt sich das in der Kavität eingeschlossene Medium, so lenkt die Membran aus und wölbt sich gegen die spiralförmige Ausnehmung, so dass der Querschnitt des Strömungskanals reduziert und die wirksame Länge des Strömungskanals vergrößert wird. Folglich erhöht sich der Widerstand des Strömungskanals und die Flussrate reduziert sich. Bei entsprechend ausgelegten Geometrien wird die Flussratenerhöhung durch die temperaturbedingte Abnahme der Viskosität des Fluids kompensiert.

Der Strömungskanal ist als eine zur Membran hin offene spiralförmige Ausnehmung in einer Oberfläche der die Strömungskammer verschließenden unteren Abdeckung gebildet ist.

Bei thermischer Ausdehnung des eingeschlossenen Mediums berührt die Membran die ihr gegenüber liegende Fläche der unteren Abdeckung. Dehnt sich das Medium bei Temperaturerhöhung weiter aus, so vergrößert sich die Kontaktfläche. Die Membran ist zumindest abschnittsweise Wandung des Strömungskanals, der zur Membran hin offen ist.

Bei spiralförmiger Ausführung des Strömungskanals ist die Zuflussöffnung im Zentrum der von dem Strömungskanal aufgespannten Fläche angeordnet, während die Abflussöffnung randseitig angeordnet ist.

Dort, wo die Membran auf dem Strömungskanal aufliegt, ist der Strömungskanal geschlossen. Folglich entsteht in Abhängigkeit der Membranwölbung bzw. der Größe der Kontaktfläche ein unterschiedlich langer Strömungskanal, der sodann als variabler, temperaturabhängiger Widerstand wirkt.

Somit variiert der Widerstand des Strömungskanals mit der Membrandurchbiegung, also in Abhängigkeit von der Temperatur. Auch in diesem Fall kann bei entsprechender Dimensionierung der Komponenten die Flussrate temperaturstabilisiert werden.

Vorzugsweise erstreckt sich der Strömungskanal über eine Fläche, die der Flächenerstreckung des druckbeaufschlagten Bereichs der Membran entspricht.

Gemäß einer bevorzugten Ausführungsform ist die Kavität in einer oberen Oberfläche eines Substrats und die Strömungskammer in einer unteren Oberfläche des Substrats ausgebildet, wobei die Kavität durch eine obere Abdeckung und die Strömungskammer durch die untere Abdeckung verschlossen ist. Die untere Abdeckung weist die Ein- und Auslassöffnung auf. Die zwischen der Kavität und der Strömungskammer verlaufende Membran ist als integraler Bestandteil des Substrats ausgebildet.

Eine weitere bevorzugte Ausführungsform zeichnet sich dadurch aus, dass die Abdeckung für die Kavität als Glas-Abdeckung und die Abdeckung der Strömungskammer bzw. die den Strömungskanal aufnehmende Abdeckung aus Kunststoff ausgebildet ist und die Ein- und Auslassöffnung aufweist.

Vorzugsweise ist das Substrat als Silicium-Substrat bzw. Silicium-Wafer oder aus Kunststoff ausgebildet.

Bei Verwendung eines Silicium-Substrats ist die Membran unter Verwendung von nass-oder trockenchemischen Verfahren hergestellt. Vorzugsweise wird das Silicium-Substrat thermisch oxidiert, um weitgehende chemische Inaktivität und Biokompatibilität zu erreichen.

In weiterer bevorzugter Ausführungsform ist die Glas-Abdeckung ein Glas-Wafer, welcher mittels Anodic Bonding mit dem Si-Substrat verbunden ist. Die Kavität nimmt vorzugsweise als Medium ein Gas oder eine Flüssigkeit auf. Im Falle einer Gasfüllung wird der Glas-Wafer vorzugswiese in einer entsprechenden Gas-Atmosphäre aufgebondet. Bei Verwendung einer Flüssigkeit als Medium wird die Kavität nach dem Bonden durch Kanäle befüllt, die anschließend wieder verschlossen werden.

Vorzugsweise wird die untere Abdeckung des Strömungsraums zusammen mit Schlauchflanschen für die Medikamentenzu- und -abfuhr als Spritzgussteil aus Kunststoff oder aus Silicium-Substrat, insbesondere aus oxidiertem Silicium hergestellt.

Weitere Einzelheiten, Vorteile und Merkmale der Erfindung ergeben sich nicht nur aus den Ansprüchen, den diesen zu entnehmenden Merkmalen - für sich und/oder in Kombination-, sondern auch aus der nachfolgenden Beschreibung von der Zeichnung zu entnehmenden bevorzugten Ausführungsbeispielen.

Es zeigen:

Fig. 1a, 1b     eine schematische Schnittdarstellung einer ersten Ausführungsform eines temperaturkompensierten Strömungswiderstands bei unterschiedlichen Temperaturen,

Fig. 2a - 2h     eine schematische Schnittdarstellung der ersten Ausführungsform eines temperaturkompensierten Strömungswiderstandes in verschiedenen Herstellungsschritten,

Fig. 3     eine schematische Schnittdarstellung einer zweiten Ausführungsform eines temperaturkompensierten Strömungswiderstandes,

Fig. 4a, 4b     eine Draufsicht auf einen von einer Membran abgedeckten Strömungskanal bei unterschiedlichen Temperaturen und

Fig. 5a - 5h     eine schematische Schnittdarstellung der zweiten Ausführungsform eines temperaturkompensierten Strömungswiderstandes in verschiedenen Herstellungsschritten.

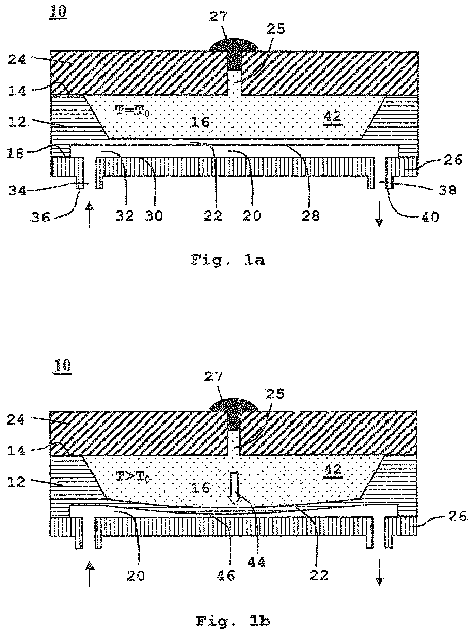

Die Fig. 1a und 1b zeigen rein schematisch einen Querschnitt einer ersten Ausführungsform eines temperaturkompensierten Strömungswiderstandes 10. Der Strömungswiderstand 10 umfasst ein Substrat 12 wie Si-Substrat, in dessen obere Oberfläche 14 eine Kavität 16 und in dessen untere Oberfläche 18 ein Strömungsraum 20 eingebracht ist. Zwischen der Kavität 16 und dem Strömungsraum 20 verläuft eine Membran 22, wobei die Membran 22 integraler Bestandteil des Si-Substrats 12 ist.

Die Kavität 16 ist mittels einer Abdeckung 24 wie Glas-Abdeckung verschlossen, beispielsweise mittels Anodic Bonding.

Der Strömungsraum 20 ist mittels einer unteren Abdeckung 26 verschlossen, wobei zwischen einer Unterseite 28 der Membran 22 und einer Oberseite 30 der Abdeckung 26 ein Strömungskanal 32 gebildet ist. In der unteren Abdeckung 26 ist eine Einlassöffnung 34 mit Schlauchanschluss 36 sowie eine Auslassöffnung 38 mit Schlauchanschluss 40 vorgesehen. Einlass- und Auslassöffnung 34, 38 sind randseitig angeordnet, so dass der Strömungskanal 32 eine definierte Länge aufweist.

In der Kavität 16 ist ein Medium 42 wie Gas oder eine Flüssigkeit eingeschlossen.

Wie den Fig. 1a, 1b zu entnehmen ist, bildet die Membran 22 eine Wandung der Kavität 16. Erwärmt sich das eingeschlossene Medium 42, so lenkt die Membran 22 aus, wie dies in Fig. 1b dargestellt ist.

Die Membran 22 ist gleichzeitig auch eine Begrenzung des Strömungskanals 32. Durch einen durch die Temperaturausdehnung des Mediums 42 auf die Membran 22 ausgeübten Druck in Richtung des Pfeils 44 wird die Membran 22 gebogen, so dass ein Querschnitt 46 des Strömungskanals 32 verengt wird. Folglich erhöht sich der Strömungswiderstand und die Flussrate wird reduziert.

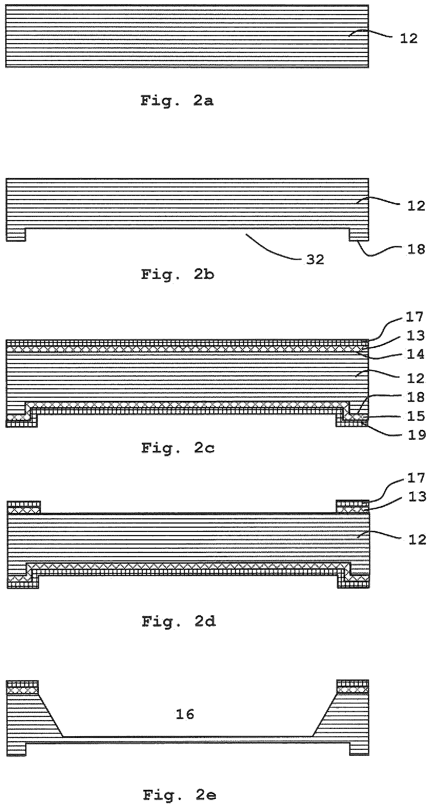

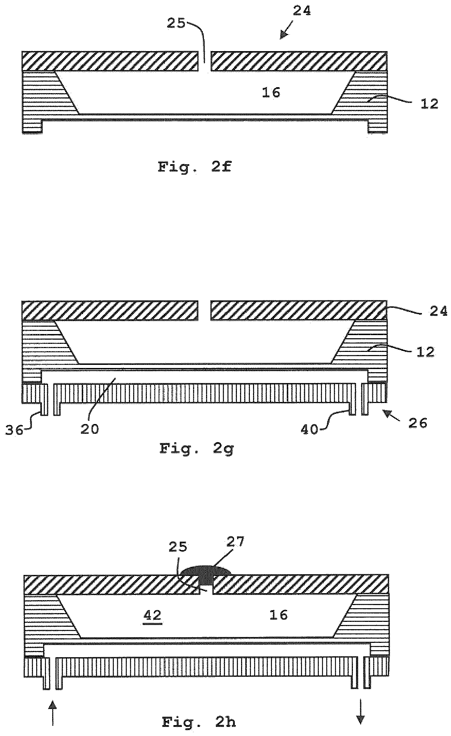

Die Fig. 2a bis 2h zeigen jeweils einen Querschnitt durch einen einzelnen Chip eines Wafers in verschiedenen Herstellungsschritten.

Fig. 2a zeigt als Ausgangsmaterial einen Siliciumwafer 12, der vorzugsweise doppelseitig poliert ist.

Nach einer photolithografischen Maskierung eines Bereichs der unteren Oberfläche erfolgt ein Ätzen des Strömungsraums 20 z.B. durch reaktives Ionentiefenätzen (DRIE-Ätzen; deep reactive ion etching).

In einem weiteren Verfahrensschritt gemäß Fig. 2c erfolgt eine thermische Oxidation der oberen und unteren Oberfläche 14, 18 des Substrats 12 mit vorzugsweise einer SiO2-Schicht 15, 17 sowie anschließend einer Abscheidung von beispielsweise LPCVD-Nitrit (Si3N4) 17, 19.

Fig. 2d zeigt den Verfahrensschritt der photographischen Maskierung sowie des Ätzens der SiO2-Schicht 13 sowie der Si3N4-Schicht 17 durch z.B. RIE (reactive ion etching)-Ätzen. Nach dem Ätzen wird die Photolithografie-Maske entfernt.

Anschließend wird die Kavität 16 gemäß Fig. 2e geätzt. Das Ätzen der Kavität 16 erfolgt vorzugsweise mittels anisotropem KOH (Kaliumhydroxid)-Ätzen. Alternativ kann die Kavität 16 auch durch DRIE-Ätzen eingeformt werden.

Nach Entfernen der SiO2-Schichten 13, 15 sowie der Si3N4-Schichten 17, 19 erfolgt ein Verschließen der Kavität 16 mittels einer Abdeckung 24 durch z.B. einen Glaswafer mit einer vorzugsweise Ultraschall gebohrten Einfüllöffnung 25. Vorzugsweise wird der Glaswafer 24 mit dem Silicium 12 durch anodisches Bonden verbunden.

In einem weiteren Verfahrensschritt gemäß Fig. 2g erfolgt die Abdeckung der Strömungskammer 20 mit der unteren Abdeckung 26. Diese kann als glatte Grundplatte mit Schlauchanschlüssen 36, 40 z.B. durch Kunststoffspritzgussteil ausgebildet sein. Die Grundplatte 26 wird mit dem Siliciumwafer 12 verbunden wie verklebt.

Alternativ kann auch ein zweiter, strukturierter Glaswafer oder Siliciumwafer mit aufgeklebten Schlauchflanschen verwendet werden

In einem nächsten Verfahrensschritt gemäß Fig. 2h wird die Kavität 16 mit dem Medium 42 beispielsweise in einem Exsikkator gefüllt. Die Einfüllöffnung 25 wird anschließend mit einem Verschluss 27 verschlossen, der z.B. durch eine Vergussmasse oder durch Klebstoff ausgebildet ist.

Für die Temperaturabhängigkeit der Viskosität von Reinstoffen gilt die Andrade-Gleichung [1]

$$\eta = A \cdot e^{\frac{b}{T}} \qquad \text{mit} \qquad a = \ln(A)$$

$\eta$    Viskosität
A, b    empirische Konstanten
T    absolute Temperatur

Für Wasser gilt im Bereich von 1°C bis 99°C: a = -6,944 und b = 2036.

Für die Viskosität von Wasser bei 5°C bzw. 35°C ergeben sich die Werte:

$$\eta_{H2O,\,5°C} = 1,46 \text{ mPa·s} \qquad \text{und} \qquad \eta_{H2O,\,35°C} = 0,72 \text{ mPa·s}$$

Die Viskosität reduziert sich in diesem Fall also um etwa die Hälfte. Da $\eta$ linear in die Berechnung der Flussrate eingeht, bedeutet dies eine Verdopplung der Durchflussmenge bei der Temperaturerhöhung von 5°C auf 35°C.

Die Grundeinstellung des Flusses erfolgt bei der ersten Ausführungsform des Strömungswiderstandes 10 durch Querschnittsveränderung des Strömungskanals 32. Der Fluss durch z.B. einen rohrförmigen Strömungskanal 32 berechnet sich nach der Hagen-Poisseuille-Gleichung:

$$\Phi = \frac{dV}{dt} = \frac{\pi \cdot r^4}{8 \cdot \eta} \cdot \frac{\Delta p}{L}$$

$\Phi$      Fluss

$t$      Zeit

$r, L$      Radius und Länge der Kapillare

$\Delta p$      Druckdifferenz (generiert den Fluss)

Anhand der Gleichung wird deutlich, dass eine sinkende Viskosität bei steigender Temperatur durch eine Verlängerung des Kanals oder durch eine Reduzierung des Kanalquerschnitts bzw. Durchmessers erreicht werden kann.

Bei entsprechend ausgelegten Geometrien wird die Flussratenerhöhung durch die temperaturbedingte Abnahme der Viskosität kompensiert.

Kompensation durch Veränderung des Kanalquerschnitts 46:

Eine Verallgemeinerung der Hagen-Poisseuille-Gleichung ist nach [2] gegeben durch:

$$\Phi = \frac{1}{C_R} \cdot \frac{A^2}{\eta \cdot L} \cdot \Delta p \qquad C_R \qquad \text{Geometrieabhängiger Koeffizient}$$

$A$      Querschnittsfläche der Kapillare oder des Strömungskanals
($C_R = 8\pi$ und $A = \pi r^2 \Rightarrow$ Hagen-Poisseuille)

Für Strömungskanäle mit rechteckigem Querschnitt gilt nach [3]

$$C_R = \frac{2}{a \sum_{i=1}^{\infty} \frac{a}{\alpha_i^5}\left(\frac{\alpha_i}{a} - \tanh\left(\frac{\alpha_i}{a}\right)\right)} \qquad \text{mit} \qquad a = \frac{h}{b} \qquad \text{und} \qquad \alpha_i = \frac{\pi \cdot (2i-1)}{2}$$

Dabei stellen b und h die Breite und Höhe(Tiefe) des Strömungskanals dar.

Geht man bei den beschriebene temperaturkompensierten Strömungswiderständen von typischen Größenordnungen der MEMS- Technologie aus, so ergibt sich für den rechteckigen Strömungskanal 32 mit einer Länge von 3mm, einer Breite von 150 $\mu$m und einer Tiefe (Höhe) von 15 $\mu$m ein $C_R$ von ca. 126.

Ein Kanal mit diesen Abmessungen ist beispielsweise durch DRIE-Ätzung eines Siliciumwafers realisierbar.

Mit diesem $C_R$, einem $\Delta p$ von 300mbar und einer Kanallänge von 3 mm ergibt sich aus der Hagen-Poisseuille-Gleichung bei 5 °C ein Fluss von etwa 1 ml / Stunde für Wasser. Es handelt sich hierbei um eine typische Dosierung für Medikamente auf Basis von wässrigen Lösungen, die mit Perfusionspumpen verabreicht werden. Die Viskosität wird in diesen Lösungen überwiegend durch das Wasser bestimmt.

Eine analoge Rechnung mit der Viskosität von Wasser bei 35°C liefert einen Fluss von 1 ml / Stunde bei einer Kanaltiefe von 12 μm bei ansonsten gleichen Parametern. Dementsprechend muss zur Kompensation der Temperaturänderung von 5 auf 35°C der Kanal etwa 3 μm flacher sein.

Für die Abschätzung wird vereinfachend angenommen, dass sich die Membrane 22 nicht durchbiegt, sondern, sich mit der Volumenzunahme planparallel zur Kanaloberfläche verschiebt. Die Verschiebung der Membran 22 durch die Ausdehnung entspricht dann der Verminderung der Höhe des Strömungskanals 32. Dabei können die mechanischen Eigenschaften der Membran 22 außer acht gelassen werden, solange es sich bei dem Medium 42 um eine Flüssigkeit handelt, da diese inkompressibel ist und die restlichen Wandungen der Kavität 16 als starr angesehen werden können.

Für die Ausdehnung des Mediums 42 gilt:

$$\Delta V = V_0 \cdot \gamma \cdot \Delta T$$

ΔV    Volumenzunahme (Wärmeausdehnung)

$V_0$    Volumen der Kavität

ΔT    Temperaturänderung

γ    Thermischer Ausdehnungskoeffizient

Mit $\Delta V = b \cdot L \cdot \Delta h$ (Δh = Verschiebung der Membrane, bzw. Änderung der Kanalhöhe) gilt:

$$\Delta h = \frac{\Delta V}{b \cdot L} = \frac{V_0 \cdot \gamma}{b \cdot L} \cdot \Delta T$$

Wird dabei sinnvoller Weise für die Kavität 16 die gleiche Grundfläche (b·L) wie für die Membran 22 verwendet und für die Höhe der Kavität 480μm angenommen, so ergibt sich bei ΔT = 30°C und γ = 0,21 10-3 1/K (Wasser) ein Δh von 3μm.

Dies entspricht der notwendigen Veränderung zur Kompensation der temperaturbedingten Änderung der Viskosität.

Die Membranverschiebung kann über die Höhe der Kavität angepasst werden, dabei gilt je höher die Kavität ist, desto größer ist die Verschiebung. Ein zweiter Ansatz ist die Verwendung eines anderen Mediums als Wasser in der Kavität. Eine Alternative ist beispielsweise Ethanol, das mit y= 1,1 10-3 1/K einen deutlich höheren Ausdehnungskoeffizient aufweist und somit eine größere Verschiebung hervorruft.

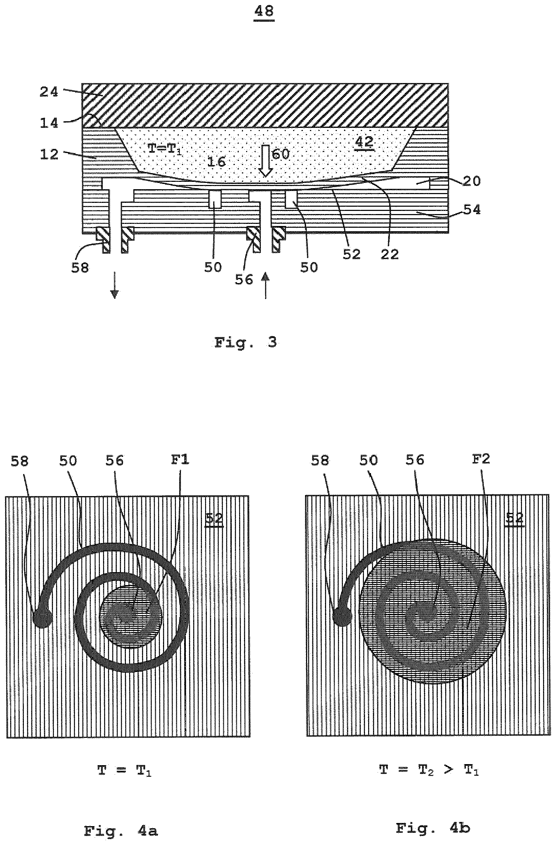

Die Fig. 3 zeigt eine zweite Ausführungsform eines temperaturkompensierten Strömungswiderstandes 48 in schematischer Schnittdarstellung, wobei in Bezug auf den Strömungswiderstand gleiche Elemente mit gleichen Bezugsziffern bezeichnet sind.

Der Strömungswiderstand 48 unterscheidet sich von dem Strömungswiderstand 10 dadurch, dass ein Strömungskanal 50 in einer der Membran 22 gegenüber liegenden Oberfläche 52 einer unteren Abdeckplatte 54 gebildet ist. Im dargestellten Ausführungsbeispiel ist der Strömungskanal 50 gemäß Fig. 4a, 4b spiralförmig ausgebildet, wobei im Zentrum eine Einlassöffnung 56 und randseitig eine Auslassöffnung 58 vorgesehen ist.

Bei thermischer Ausdehnung des eingeschlossenen Mediums 42 innerhalb der Kavität 16 wird ein Druck in Richtung des Pfeils 60 auf die Membran 22 ausgeübt, so dass diese gegen die Oberfläche 52 der Abdeckplatte 54 drückt und folglich einen Wandabschnitt des Strömungskanals 50 bildet und die Länge des Strömungskanals bestimmt.

Eine bei einer Temperatur T = T1 durch die Membran 22 abgedeckte Kontaktfläche F1 ist in Fig. 4a schraffiert dargestellt. Erhöht sich die Temperatur auf einen Wert T2 > T1, dehnt sich das Medium 42 weiter aus, so dass sich auch die Kontaktfläche F1 zwischen Membran 22 und der Oberfläche 52 vergrößert. Eine vergrößerte Kontaktfläche F2 bei der Temperatur T2 ist in Fig. 4b schraffiert dargestellt und hat eine Verlängerung des effektiven Strömungskanals 50 zur Folge.

Der zur Membran hin offene Strömungskanal 50 wird durch die Unterseite der Membran 22 bereichsweise geschlossen, so dass sowohl die Länge als auch der Querschnitt des Strömungskanals 50 von dem Druck des Mediums 42 und somit von der Temperatur abhängig ist. Somit entsteht in Abhängigkeit der Wölbung der Membran 22 bzw. der Größe der Kontaktfläche F1, F2 ein unterschiedlich langer Strömungskanal 50, und somit ein unterschiedlich großer Widerstand des Strömungskanals.

Der Widerstand des Strömungskanals variiert somit mit der Membrandurchbiegung, also mit der Temperatur. Auch in diesem Fall kann bei entsprechender Dimensionierung der Komponenten die Flussrate temperaturkompensiert werden.

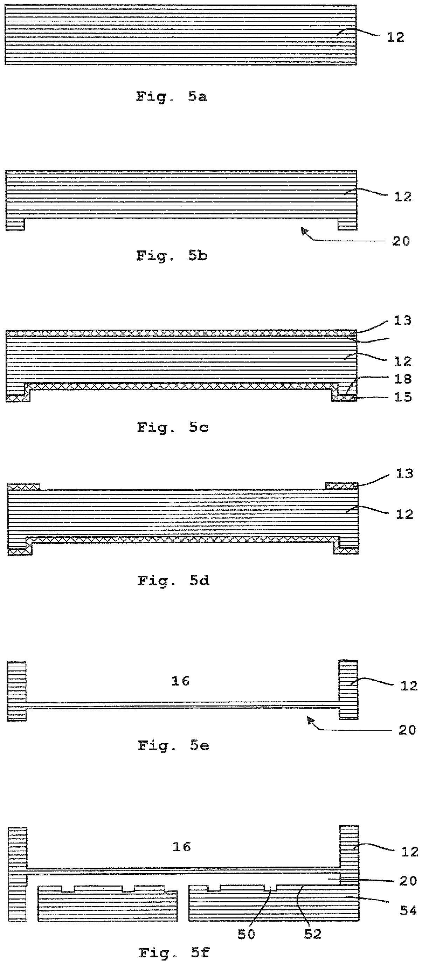

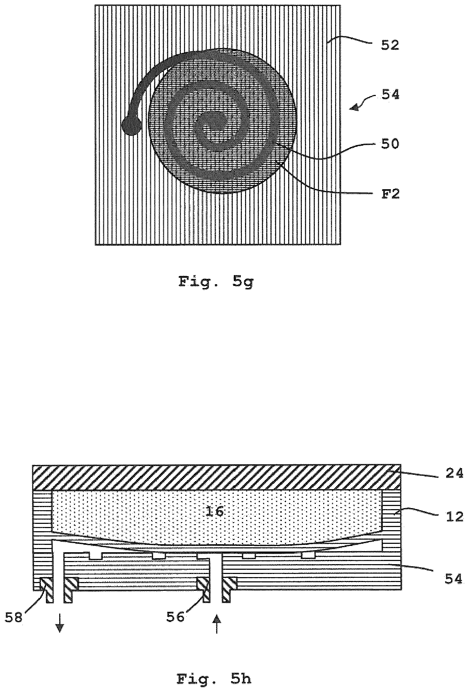

Die Fig. 5a bis 5h zeigen einen Querschnitt des Strömungswiderstandes 48 in verschiedenen Herstellungsschritten.

In einem ersten Herstellungsschritt wird als Ausgangsmaterial ein Siliciumwafer 12 doppelseitig poliert.

Nach einer photolithografischen Maskierung erfolgt ein Ätzen der Strömungskammer 20 vorzugsweise mittels DRIE-Ätzen. Anschließend wird die Photolithografie-Maske entfernt.

Fig. 5c zeigt den Siliciumwafer 12 nach thermischer Oxidation, wobei auf einer oberen Oberfläche 14 und einer unteren Oberfläche 18 jeweils $SiO_2$-Schichten 13, 15 aufgebracht sind.

Nach photolithografischer Maskierung erfolgt ein Ätzen der $SiO_2$-Schicht 13 vorzugsweise mittels RIE-Ätzen und sodann eine Entfernung der Photolithografie-Maske, wie in Fig. 5d dargestellt. Anschließend wird die Kavität 16 vorzugsweise mittels DRIE-Ätzen hergestellt, wie in Fig. 5e dargestellt ist.

Zur Abdeckung der Strömungskammer 20 wird die Grundplatte 54 verwendet, die vorzugsweise aus Silicium hergestellt ist. In die Oberfläche 52 der Grundplatte 54 wird der Strömungskanal 50 durch vorzugsweise DRIE-Ätzen eingelassen.

In bevorzugter Ausführungsform ist der Strömungskanal 50 im Querschnitt rechteckförmig und spiralförmig in die Oberfläche 52 eingeätzt.

Die beiden Siliciumwafer 12, 54 werden verbunden, vorzugsweise durch Eutectic-Bonding oder durch Silicon-Fusion-Bonding.

Fig. 5c zeigt eine Draufsicht auf die Oberfläche 52 der Abdeckplatte 54 mit Strömungskanal 50 und abgedeckter schraffierter Membranfläche F2.

Gemäß Fig. 5h wird die Kavität 16 durch anodisches Bonden der als Glaswafer ausgebildeten oberen Abdeckung 24 mit dem Siliciumwafer 12 unter erhöhtem Gasdruck z.B. Stickstoff $N_2$ verschlossen. Schließlich werden die Schlauchflansche 58, 56 mit der unteren Abdeckung 54 verbunden wie verklebt.

Die Erfindung unterscheidet sich von dem Stand der Technik dadurch, dass sowohl der Strömungswiderstand (Restriktionsstrecke) als auch eine Temperaturkompensation in bzw. auf einem Substrat bzw. Chip integriert werden können.

Somit ist der Strömungswiderstand 10, 48 als mikrosystemtechnisches Element realisiert, welches Dimensionen in vertikaler Richtung im Mikrometer-Bereich und in horizontaler Richtung im Mikro- oder Millimeter-Bereich aufweist. Die Membranen 22, die Kavitäten 16 sowie die Strömungskammern 20 werden aus Siliciumwafer unter Verwendung von nass- oder trockenchemischen Tiefenätzverfahren wie anisotropes Ätzen oder DRIE-Ätzen hergestellt.

Um eine Biokompatibilität und eine weitestgehende chemische Inaktivität zu gewährleisten, wird das Si-Substrat 12 thermisch oxidiert. Nach Fertigstellung der Membranen 22 werden die Kavitäten 16 mit der Abdeckung 24 verschlossen, die als Glaswafer ausgebildet ist und über beispielsweise Anodic-Bonding mit der Oberfläche 14 des Substrats verbunden ist.

Sofern als Medium 42 ein Gas verwendet wird, wird die obere Abdeckung 24 als Glas-wafer in einer entsprechenden Atmosphäre aufgebondet.

Sofern als Medium 42 eine Flüssigkeit Verwendung findet, wird die Flüssigkeit nach dem Bonden durch zumindest einen Kanal 25 befüllt, der anschließend mittels z.B. Klebstoff oder Vergussmasse wieder verschlossen wird.

Die untere Abdeckung 26 für die Strömungskammer 20 des Strömungswiderstandes 10 ist als Kunststoff-Teil vorzugsweise Spritzgussteil hergestellt und umfasst die Schlauchflansche 36, 40.

Die untere Abdeckung 54 des Strömungswiderstandes 48 ist aus oxidiertem Silicium hergestellt, wobei der Strömungskanal 50 in die Oberfläche 52 der Abdeckung 54 eingelassen ist. Dabei werden unterschiedliche Ätzverfahren wie anisotropes Ätzen mit KOH oder TMAH (Tetramethylammoniumhydroxid) und DRIE-Ätzen eingesetzt.

Nach dem Deckeln der die Kavitäten 16 bzw. Strömungskammer 20 aufweisenden Si-Wafer 12 mit vorzugsweise Glas erfolgt eine Vereinzelung in Chips und das Anbringen von Schlauchanschlüssen 36, 40, 56, 58 beispielsweise mittels Kleben.

**Patentansprüche**

1. Strömungswiderstand (48), umfassend einen Strömungskanal (50) mit einer Einlassöffnung (56) und einer Auslassöffnung (58) sowie eine zumindest abschnittsweise Wandung des Strömungskanals (50) bildende Membran (22), wobei Strömungsquerschnitt des Strömungskanals (50) durch Ausübung von Druck auf die Membran (22) variierbar ist,

**dadurch gekennzeichnet,**

**dass** der Strömungswiderstand (48) eine ein Medium (42) mit positivem Temperaturkoeffizienten enthaltende Kavität (16) sowie eine Strömungskammer (20) aufweist,

**dass** die Membran (22) die Kavität (16) von der Strömungskammer (20) trennt und sowohl Wandung der Kavität (16) als auch zumindest abschnittsweise Wandung des Strömungskanals (50) ist,

**dass** der Strömungskanal (50) als eine zur Membran (22) hin offene spiralförmige Ausnehmung in einer Oberfläche (52) einer die Strömungskammer (20) verschließenden unteren Abdeckung (54) ausgebildet ist,

**dass** eine Zuflussöffnung (56) im Zentrum einer von dem Strömungskanal (50) aufgespannten Fläche und eine Abflussöffnung (58) randseitig derart angeordnet sind, dass der Strömungskanal (50) sowohl in Bezug auf seinen Strömungsquerschnitt als auch in Bezug aus seine Länge, auf der die Membran (22) aufliegt, in Abhängigkeit von Temperatur T des Mediums (42) variierbar ist.

2. Strömungswiderstand nach Anspruch 1,
**dadurch gekennzeichnet,**
**dass** die Kavität (16) in einer oberen Oberfläche (14) eines Substrats (12) und die Strömungskammer (20) in einer unteren Oberfläche (18) des Substrats (12) ausgebildet ist und dass die Kavität (16) durch eine obere Abdeckung (24) und die Strömungskammer (20) durch die untere Abdeckung (54) verschlossen ist.

3. Strömungswiderstand nach Anspruch 1,
**dadurch gekennzeichnet,**
**dass** der Strömungskanal (50) einen rechteckigen oder halbkreisförmigen Querschnitt aufweist.

4. Strömungswiderstand nach Anspruch 1,
**dadurch gekennzeichnet,**
**dass** die von dem Strömungskanal (50) aufgespannte Fläche im Wesentlichen einer Fläche der Membran (22) entspricht.

5. Strömungswiderstand nach Anspruch 2,
**dadurch gekennzeichnet,**
**dass** die obere Abdeckung (24) eine Glas-Abdeckung ist, vorzugsweise als Teil eines Glas-Wafers, welcher mittels Anodic Bonding mit dem Si-Substrat verbunden ist.

6. Strömungswiderstand nach Anspruch 2,
**dadurch gekennzeichnet,**
**dass** das Substrat (12) ein Si-Substrat oder ein Kunststoff-Formteil ist.

7. Strömungswiderstand nach Anspruch 2,
**dadurch gekennzeichnet,**
**dass** die zwischen der Kavität (16) und der Strömungskammer (20) verlaufende Membran (22) als integraler Bestandteil des Substrats (12) ausgebildet ist und dass die Membran (22) unter Verwendung eines nass- oder trockenchemischen Verfahrens hergestellt ist.

8. Strömungswiderstand nach Anspruch 6,
**dadurch gekennzeichnet,**
**dass** das Si-Substrat (12) thermisch oxidiert ist.

9. Strömungswiderstand nach Anspruch 1,
**dadurch gekennzeichnet,**
**dass** das Medium (42) ein Gas oder eine Flüssigkeit ist.

10. Strömungswiderstand nach Anspruch 1,
**dadurch gekennzeichnet,**
**dass** die untere Abdeckung (54) ein Kunststoff-Formteil wie Spritzgussteil ist.

11. Strömungswiderstand nach Anspruch 1,
**dadurch gekennzeichnet,**
**dass** die untere Abdeckung (54) aus einem Si-Substrat hergestellt ist.

Fig. 1a

Fig. 1b

Fig. 2a

Fig. 2b

Fig. 2c

Fig. 2d

Fig. 2e

Fig. 2f

Fig. 2g

Fig. 2h

<u>48</u>

Fig. 3

T = T$_1$

Fig. 4a

T = T$_2$ > T$_1$

Fig. 4b

Fig. 5a

Fig. 5b

Fig. 5c

Fig. 5d

Fig. 5e

Fig. 5f

Fig. 5g

Fig. 5h

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10254312 A
- DE 19913143 A1
- DE 102008054220 A1
- DE 69014759 T2
- US 20030010948 A1
- JP 09330132 A
- DE 19650115 A

**In der Beschreibung aufgeführte Nicht-Patentliteratur**

- **P. COUSSEAU.** *Improved Micro-Flow Regulator for drug delivery systems,* 2001, 527-530